# EUROPÄISCHE PATENTSCHRIFT

(11) **EP 3 652 831 B1**
(45) Veröffentlichungstag und Bekanntmachung des Hinweises auf die Patenterteilung: **21.01.2026**
(21) Anmeldenummer: 18716249.0
(22) Anmeldetag: 06.04.2018
(51) Int. Cl.: H02G 3/22

(54) **ZUGENTLASTUNGSTÜLLE**
STRAIN RELIEF BUSHING
PASSE-CÂBLE À DÉCHARGE DE TRACTION

(30) Priorität: 13.07.2017 DE 102017212009
(43) Veröffentlichungstag der Anmeldung: 20.05.2020
(73) Patentinhaber: icotek project GmbH & Co. KG, 73569 Eschach (DE)
(72) Erfinder: Ehmann, Bruno, 73527 Schwäbisch Gmünd (DE); Ehmann, Valentin, 73563 Mögglingen (DE)
(74) Vertreter: Dr. Weitzel & Partner
(86) Internationale Anmeldenummer: PCT/EP2018/058820
(87) Internationale Veröffentlichungsnummer: WO 2019/011485

(56) Entgegenhaltungen:
- EP-A1- 0 514 174
- EP-B1- 0 514 174
- WO-A2-2011/042128
- DE-U1- 202012 101 639

## Beschreibung

Die Erfindung betrifft eine Zugentlastungstülle aus einem elastischen Werkstoff zur Aufnahme wenigstens eines Kabels in wenigstens einer axialen Durchgangsöffnung, die über einen Schlitz aufklappbar zumindest mittelbar mit einer Außenseite der Zugentlastungstülle verbunden ist. Ferner betrifft die Erfindung eine Kabeldurchführung zur Konfektionierung mit derartigen Zugentlastungstüllen mit einem einseitig offenen Rahmen und einem Rahmendeckel.

Aufklappbare Zugentlastungstüllen, welche zur Aufnahme von konfektionierten Kabeln mit Steckern oder dergleichen geeignet sind, sind aus dem allgemeinen Stand der Technik bekannt. Diese bestehen typischerweise aus einem elastischen Material, beispielsweise einem Elastomer. Sie lassen sich entlang eines Schlitzes so aufklappen, dass eine Durchgangsöffnung seitlich zugänglich ist. Damit kann ein Kabel, auch wenn beispielsweise an beiden Seiten Stecker oder dergleichen angeordnet sind, in die Durchgangsöffnung eingelegt werden. Anschließend wir die Zugentlastungstülle zugeklappt und umschließt das Kabel dicht und wenn sie verpresst wird so fest, dass neben der Abdichtwirkung auch eine Zugentlastung des Kabels realisiert werden kann. Die zugeklappte Zugentlastungstülle wird dann beispielsweise in einen Rahmen oder ein Aufnahmeelement eingelegt und durch Verschließen dieses Rahmens beziehungsweise Aufnahmeelements verpresst. Dadurch ist ein inniger Kontakt des Materials der Zugentlastungstülle zum äußeren Mantel des Kabels gegeben und gleichzeitig wird der Schlitz sicher und zuverlässig zugedrückt. Hierdurch ist eine sehr gute Zugentlastung bei hervorragender Abdichtung möglich.

In der Praxis ist es jetzt so, dass eine zuverlässige Zugentlastung und Abdichtung eine zum jeweiligen Kabeldurchmesser passende Zugentlastungstülle erforderlich macht. Die Zugentlastungstüllen sind daher am Markt in verschiedenen Durchmessern erhältlich, insbesondere in Abstufungen von jeweils 1 mm. In der Praxis ist es so, dass das jeweils zum Nenndurchmesser passende Kabel in die jeweils passende Zugentlastungstülle eingelegt wird. Hierdurch ist eine gute Zugentlastung und Abdichtung gewährleistet. Toleranzen innerhalb des Kabels und geringfügige Durchmesserabweichungen von bis zu 1 mm lassen sich durch das elastische Material ausgleichen, insbesondere wenn beim Verschließen eines die Zugentlastungstülle aufnehmenden Rahmens ein ausreichender Pressdruck aufgebracht werden kann. Dies gilt insbesondere dann, wenn dieser Rahmen aus beim Verschließen miteinander verschraubten Rahmenteilen besteht. Abweichungen von mehr als 1 mm führen in der Praxis jedoch häufig zu Undichtheiten und, insbesondere bei einem zu geringen Durchmesser des Kabels im Vergleich zum Nenndurchmesser der Zugentlastungstülle, zur Gefahr einer nicht ausreichenden Zugentlastung des Kabels.

Als Alternative existiert in der Praxis eine schwimmende Lagerung von Kabeln in einer Tülle, welche ausschließlich der Abdichtung einer Kabeleinführung dient, und welche keine beziehungsweise keine für praktische Anwendungen ausreichende Zugentlastung ermöglicht. Bei diesen Aufbauten, welche beispielsweise in der EP 1 498 994 B1 gezeigt sind, wird eine entsprechend dünne hochelastische Membran in die Durchgangsöffnung eingebracht, durch welche das Kabel durchgeführt wird. Durch eine Verformung der Membran, beispielsweise ein Umknicken in Laufrichtung des Kabels oder eine elastische Verformung des Materials der Membran, indem dieses dem Durchmesser des Kabels entsprechend ausweicht, kann so eine akzeptable Abdichtung für vergleichsweise große Durchmesserbereiche von Kabeln erzielt werden. Wie bereits erwähnt, ist das Problem die in der Praxis nicht zu erzielende Zugentlastung für das Kabel einerseits, und die Tatsache, dass bei einem entsprechenden Zug auf das Kabel die Gefahr einer Beschädigung der Membran besteht, sodass auch die Abdichtung nicht weiter gewährleistet ist.

Durch die Verwendung von Bereichen unterschiedlicher Elastizität, beispielsweise einer geringeren Elastizität im Bereich des Schlitzes, wie es in der DE 103 34 996 B4 geschützt ist, lässt sich der Problematik bezüglich der Abdichtung teilweise entgegenwirken, eine für die Praxis relevante Zugentlastung lässt sich über derartige Tüllen mit einer Membran jedoch nicht erreichen.

Die EP 0 514 174 A1 zeigt eine Kabeltülle mit mehreren in Laufrichtung des Kabels hintereinander angeordneten Dichtlippen. Sie lässt sich zum Einlegen vorkonfektionierter Kabel aufklappen.

Die DE 20 2012 101 639 U1 zeigt ein Druchführungsgehäuse mit Kabeltüllen.

Die WO 2011/042128 A2 zeigt eine Aufklappbare Kabeltülle mit einem kurvenförmigen Verlauf ihrer Innenkontur.

Die Aufgabe der hier vorliegenden Erfindung besteht nun darin, eine Zugentlastungstülle, wie sie aus dem eingangs genannten oben beschriebenen Stand der Technik prinzipiell bekannt ist, dahingehend weiterzuentwickeln, dass diese flexibler hinsichtlich des Einsatzes bei unterschiedlichen Durchmessern wird. Außerdem ist es die Aufgabe der hier vorliegenden Erfindung, eine Kabeldurchführung zur Konfektionierung mit derartigen Zugentlastungstüllen dahingehend weiterzubilden, dass diese besonders einfach und effizient in der Handhabung ist.

Diese Aufgabe wird durch eine Zugentlastungstülle mit den Merkmalen im Anspruch 1 sowie durch eine Kabeldurchführung mit den Merkmalen im Anspruch 9 gelöst. Vorteilhafte Ausgestaltungen und Weiterbildungen ergeben sich aus den jeweils hiervon abhängigen Unteransprüchen.

Die Zugentlastungstülle gemäß der Erfindung besteht, wie die Zugentlastungstüllen im Stand der Technik, aus einem elastischen Werkstoff. Sie weist zur Aufnahme wenigstens eines Kabels wenigstens eine Durchgangsöffnung auf. Diese ist über einen Schlitz mit einer Außenseite der Zugentlastungstülle verbunden. Zur Aufnahme mehrerer Kabel können auch mehrere Durchgangsöffnungen vorhanden sein. Jede dieser mehreren Durchgangsöffnungen ist über einen Schlitz aufklappbar mit einer benachbarten Durchgangsöffnung und über diese mittelbar mit der Außenseite der Zugentlastungstülle verbunden oder ist vorzugsweise direkt über den Schlitz mit der Außenseite der Zugentlastungstülle verbunden. Die Zugentlastungstülle wird typischerweise eine Durchgangsöffnung, zwei nebeneinander liegende Durchgangsöffnungen oder vier gleichmäßig verteilt angeordnete Durchgangsöffnung aufweisen. Diese weisen dann im Idealfall jeweils einen Schlitz zum Aufklappen auf, welcher zur Außenseite verläuft. Bei zwei nebeneinander liegenden Durchgangsöffnungen ist es -wie erwähnt- auch denkbar, dass lediglich eine der Durchgangsöffnungen über einen Schlitz mit der Außenseite verbunden ist und diese Durchgangsöffnung dann über einen weiteren Schlitz mit der anderen benachbarten Durchgangsöffnung.

Dabei ist es vorgesehen, dass jede der Durchgangsöffnungen in Axialrichtung hintereinander wenigstens zwei Zugentlastungsabschnitte unterschiedlichen Querschnitts aufweist, welche exzentrisch zueinander angeordnet sind.

Erfindungsgemäß ist es dann ferner vorgesehen, dass der Zugentlastungsabschnitt mit dem geringsten Querschnitt der Durchgangsöffnung wenigstens 10 %, vorzugsweise wenigstens 15 %, besonders bevorzugt wenigstens 20 %, der axialen Länge der jeweiligen Durchgangsöffnung ausmacht. Durch diese Ausgestaltung des Zugentlastungsabschnitts mit dem geringsten Querschnitt der Durchgangsöffnung mit einer vergleichsweise großen Breite von mindestens 10 % der gesamten Dicke der Zugentlastungstülle beziehungsweise der mit ihr korrespondierenden axialen Länge der jeweiligen Durchgangsöffnung, stellt sicher, dass auch der Bereich des geringsten Querschnitts ausreichend dick ist, um neben der guten Abdichtung eine für die Praxis ausreichende Zugentlastung zu gewährleisten. Der Zugentlastungsabschnitt mit dem geringsten Querschnitt ist also bewusst nicht als eine Art Membran ausgebildet, sondern hat eine sehr viel größere Breite, als es eine solche Membran hätte.

In der Praxis hat sich gezeigt, dass beispielsweise bei einem Nenndurchmesser in der Größenordnung von 5 mm und einer Ausgestaltung mit wenigstens zwei Zugentlastungsabschnitten unterschiedlicher Querschnitte, welche beim Nenndurchmesser von 5 mm beispielsweise im Bereich des geringsten Querschnitts 5 mm und im Bereich des größeren Querschnitts 7 mm betragen, die Möglichkeit besteht, Leitungen im Durchmesserbereich von 5 bis ca. 8 mm über die Zugentlastungstülle aufzunehmen und dabei eine gute Zugentlastung einerseits und eine sehr gute Abdichtung andererseits zu gewährleisten. Wird beispielsweise ein Kabel mit 5 mm Nenndurchmesser eingelegt, so wird dieses im Bereich des Zugentlastungsabschnitts mit dem geringsten Querschnitt zuverlässig geklemmt und abgedichtet. Im Bereich des Zugentlastungsabschnitts mit dem größeren Querschnitt verbleibt dann ein Ringspalt um das Kabel, welcher jedoch unschädlich ist. Wird ein Kabel mit beispielsweise 7 oder 8 mm eingelegt, dann ist der Zugentlastungsabschnitt des geringsten Querschnitts aufgrund der Elastizität des Materials in der Lage, sich so weit zu verformen, dass das Kabel auch durch diesen Zugentlastungsabschnitt hindurch passt. Die auftretende Verformung wird allerdings so groß sein, dass eine zuverlässige Abdichtung zwischen dem Kabel und der Zugentlastungstülle nicht mehr sichergestellt ist. Im Bereich des anderen Zugentlastungsabschnitts, welcher bei zwei Zugentlastungsabschnitten idealerweise an der gegenüberliegenden Oberfläche der Zugentlastungstülle liegt, kommt jedoch eine ausreichende Abdichtung zustande, sodass die Dichtheit des Gesamtaufbaus weiterhin gewährleistet ist. Um bereits das Eindringen von Feuchtigkeit zwischen das Kabel und die Zugentlastungstülle zu vermeiden, kann idealerweise die Ausrichtung der Zugentlastungstülle bei der Montage so gewählt werden, dass der besser mit dem Nenndurchmesser des Kabels harmonierende Zugentlastungsabschnitt jeweils nach außen gewandt ist, um so die Dichtheit in jedem Fall zuverlässig zu garantieren.

Gegenüber den Aufbauten aus dem Stand der Technik ist also bei weiterhin vorhandener Zugentlastung und Dichtheit bis zur Schutzklasse IP65 eine sehr viel größere Varianz der verwendbaren Kabeldurchmesser in ein und derselben Zugentlastungstülle möglich. Anstelle beispielsweise Zugentlastungstüllen in Millimeterschritten bereitzustellen, ist man so in der Lage, einen Durchmesserbereich von Kabeln beispielsweise von 2 bis 15 mm mit anstelle von dreizehn verschiedenen Zugentlastungstüllen mit lediglich fünf bis sieben verschiedenen Zugentlastungstüllen abzudecken. Dies reduziert die erforderlichen Werkzeugkosten und die von einem Werker bei der Montage mitzuführende Anzahl von Zugentlastungstüllen erheblich, was die Verwendung der Zugentlastungstüllen gemäß der Erfindung sehr effizient macht.

Um den oben angesprochenen Ringspalt abzudichten, kann es ferner vorgesehen sein, dass zumindest eine der Durchgangsöffnungen im Bereich wenigstens eines der Zugentlastungsabschnitte mit einem der größeren Querschnitte eine Dichtlippe aufweist. Ein solche Dichtlippe, welche selbst keinen Zugentlastungsabschnitt ausbildet, sondern dafür zu dünn ausgeführt ist, kann ebenfalls mit dem geringen Querschnitt oder einem noch etwas kleineren Querschnitt als der des Zugentlastungsabschnitts mit dem geringsten Querschnitt ausgebildet sein. Die Zugentlastung und die primäre Abdichtung erfolgt zwischen dem Zugentlastungsabschnitt mit dem geringeren, zum Kabel passenden Querschnitt und dem Kabel. Die Dichtlippe dient lediglich dazu den Ringspalt grob abzudichten, um eine Ansammlung von Schutz und Feuchtigkeit in seinem Bereich zu verhindern.

Alternativ dazu wäre es aber auch denkbar, anstelle der Dichtlippe einen weiteren Zugentlastungsabschnitt mit der dafür erforderlichen Breite von mindestens 10% vorzusehen, so dass also jeweils außen an der Durchgangsöffnung ein Zugentlastungsabschnitt mit geringem Querschnitt und dazwischen wenigstens ein Zugentlastungsabschnitt mit größerem Querschnitt läge.

Die Erfindung sieht es vor, dass die wenigstens zwei Zugentlastungsabschnitte unterschiedlichen Querschnitts so angeordnet sind, dass sie mit ihrem Außenumfang auf der Seite des Schlitzes direkt ineinander übergehen. Sie folgen in Axialrichtung auf der Seite des Schlitzes also direkt aufeinander, sodass die jeweiligen Außendruchmesser Zugentlastungsabschnitte im Bereich des Schlitzes in Form eines geraden durchlaufenden Übergangs aufeinanderliegen.

Der Verlauf des Schlitzes sowohl in Axialrichtung als auch senkrecht dazu muss dabei nicht linear sein, er kann auch einen wellenförmigen oder stufenförmigen Verlauf zeigen. Verläuft er jedoch in Axialrichtung linear, dann können die Zugentlastungsabschnitte verschiedenen Querschnitts auf der Seite des Schlitzes insbesondere im Wesentlichen fluchtend ausgebildet sein.

Gemäß der erfindungsgemäßen Zugentlastungstülle ist es dabei vorgesehen, dass zwischen den wenigstens zwei Zugentlastungsabschnitten unterschiedlichen Querschnitts jeweils ein Übergangsbereich angeordnet ist, welcher die benachbarten Zugentlastungsabschnitte verbindet. Ein solcher Übergangsbereich erlaubt eine gewisse Ausgestaltung und Anpassung. So kann dieser gemäß einer vorteilhaften Weiterbildung der Idee sehr einfach auf seiner dem Schlitz abgewandten Seite in Form einer Stufe oder einer Schräge ausgebildet sein. Auf der dem Schlitz zugewandten Seite liegt ohnehin ein linearer Verlauf der fluchtenden Umfänge vor, sodass hier kein geometrisch ausgestalteter Übergangsbereich existiert. Die Stufe insbesondere auch bei mehreren stufenförmig hintereinander folgenden Zugentlastungsabschnitten unterschiedlicher Querschnitte ist eine sehr einfache Ausgestaltung. In der Praxis kann dies jedoch dazu führen, dass das Material im Übergangsbereich einer starken Verformung unterliegt, was gegebenenfalls die Dichtheit beeinträchtigt. Deshalb kann es auch vorgesehen sein, dass anstelle einer Stufe eine Schräge Verwendung findet, welche eine bessere Funktionalität ermöglicht.

Gemäß einer weiteren sehr günstigen Ausgestaltung des Übergangsbereichs kann es auch vorgesehen sein, dass dieser als kontinuierlicher Übergang ausgebildet ist. Ein solcher kontinuierlicher Übergang, welcher vom Niveau des einen Zugentlastungsabschnitts zum Niveau des anderen benachbarten Zugentlastungsabschnitts verläuft, kann die Problematik einer unerwünschten Materialverformung weitgehend ausschließen. Gemäß einer weiteren sehr vorteilhaften Ausgestaltung kann es jedoch auch vorgesehen sein, dass der Übergangsbereich so ausgestaltet ist, dass dieser über eine Kurve ausgebildet ist, welche kontinuierlich in den einen Zugentlastungsabschnitt und über eine Kante in den anderen Zugentlastungsabschnitt übergeht. Eine solche Ausgestaltung, bei welcher der Übergang insbesondere in den Zugentlastungsabschnitt mit dem größeren Querschnitt kontinuierlich und in den mit dem kleineren Querschnitt über eine Kante erfolgt, stellt eine sichere Anpressung des Zugentlastungsabschnitts mit dem kleineren Querschnitt an dem Kabel sicher, sodass eine ideale Zugentlastung gewährleistet ist. Mittels des Übergangs über eine Kante wird erreicht, dass das Material des Zugentlastungsabschnitts mit dem geringeren Querschnitt gut ausweichen kann, wenn ein Kabel mit großem Querschnitt eingelegt wird. Über den kontinuierlich erfolgenden Übergang in den Querschnitt des anderen Zugentlastungsabschnitts wird gleichzeitig eine unerwünschte Verformung des Materials in diesem Zugentlastungsabschnitt verhindert, so dass hier eine hohe Dichtheit gewährleitet ist. Dieser Aufbau, welcher beispielsweise einen exponentiellen oder parabelförmigen Kurvenverlauf aufweisen kann ist dadurch ein sehr guter Kompromiss zwischen der Zugentlastung einerseits und der Abdichtung andererseits.

Gemäß einer weiteren Ausgestaltung der Idee kann es außerdem vorgesehen sein, dass jede der Durchgangsöffnungen wenigstens drei Zugentlastungsabschnitte unterschiedlichen Querschnitts aufweist, welche nach Größe des Querschnitts sortiert in axialer Richtung aufeinander folgen. Eine solche Ausgestaltung mit drei Zugentlastungsabschnitten unterschiedlicher Querschnitte erhöht die Flexibilität der Zugentlastungstülle weiter. In der oben beschriebenen Art und Weise kann so eine zuverlässige Abdichtung entweder in dem ersten, in dem zweiten oder dem dritten Bereich realisiert werden. Die Bereiche folgen dabei entsprechend ihres Querschnitts sortiert aufsteigend oder absteigend nacheinander, sodass der jeweils am besten zum Durchmesser des Kabels passende Bereich die zuverlässige Abdichtung übernimmt und die anderen Bereiche trotz einer sehr starken Verformung und/oder eines verbleibenden Ringspalts die Funktionalität der Zugentlastungstülle nicht nachteilig beeinflussen.

Das elastische Material, aus welchem die Zugentlastungstülle gemäß der Erfindung hergestellt sein kann, ist dabei gemäß einer vorteilhaften Ausgestaltung der Idee mit einer Shore-Härte von bis zu 100 Shore A, bevorzugt 30 bis 90 Shore A, ausgestaltet. Insbesondere ein Material in diesem Bereich der Shore-Härte eignet sich ideal, um die beschriebenen Eigenschaften zu realisieren und so eine zuverlässige Abdichtung und Zugentlastung von Kabeln mit Durchmesserunterschieden von beispielsweise 2 bis 3 mm bei einem Nenndurchmesser der Zugentlastungstülle von beispielsweise 5 mm zu realisieren.

Bei der Verwendung einer Zugentlastungstülle mit nur einer Durchgangsöffnung kann es dabei gemäß einer weiteren sehr vorteilhaften Ausgestaltung der Idee vorgesehen sein, dass die Mittelachse des Zugentlastungsabschnitts mit dem geringsten Querschnitt mittig bzw. zentral in der Zugentlastungstülle angeordnet ist. In der Praxis bedeutet dies, dass die oder der Zugentlastungsabschnitt mit dem größeren Querschnitt entsprechend nach außen vom Schlitz weg versetzt angeordnet ist. Hierdurch wird erreicht, dass das Material auf der dem Schlitz gegenüberliegenden Seite der Zugentlastungstülle entsprechend dünner ist. Die Zugentlastungstülle lässt sich so ideal um den Umfang des Kabels herum verformen, sodass der Aufbau hier durch einen entsprechend geringen Druck bereits zuverlässig abgedichtet werden kann.

Eine Kabeldurchführung zur Konfektionierung mit derartigen Zugentlastungstüllen umfasst einen einseitig offenen Rahmen, welcher mit einer oder mehreren über Zwischenstege getrennten Kammern im Wesentlichen U-förmig ausgebildet ist, wobei die Kammern zur Aufnahme von jeweils wenigstens einer Zugentlastungstülle ausgebildet sind. In diesem Rahmen können die Zugentlastungstüllen zusammen mit den in die aufklappbaren Tüllen eingelegten Kabeln eingebracht werden. Der mit einer oder mehreren Kammern nebeneinander im Wesentlichen U-förmig ausgestaltete Rahmen ist dann mit einem Rahmendeckel verschlossen, wobei im montierten Zustand die wenigstens eine Zugentlastungstülle durch den Rahmendeckel in der wenigstens einen Kammer verpresst ist. Der Aufbau bewirkt also beim Verschließen des Deckels ein Verpressen der Zugentlastungstülle, und zwar in einer Richtung senkrecht zur Axialrichtung der wenigstens einen Durchgangsbohrung. Hierdurch kommt es zu einem Verpressen des Schlitzes in der Zugentlastungstülle, sodass letztlich die Abdichtung sowohl des Schlitzes als auch die Abdichtung der Durchgangsöffnung um das eingelegte Kabel herum erreicht wird. Der Rahmendeckel kann beispielsweise auf den Rahmen aufgeschraubt werden. Hierdurch sind vergleichsweise große Kräfte beim Verpressen der Zugentlastungstüllen möglich, sodass eine gute Abdichtung auch dann erzielt werden kann, wenn die Kabeldurchmesser nicht ideal zu den Nenndurchmessern der Durchgangsöffnungen passen.

In der Praxis ist das Verschrauben des Rahmendeckels häufig aufwändig, sodass gemäß einer vorteilhaften Weiterbildung der Idee der Rahmendeckel mit dem Rahmen verrastet ist. Das Verrasten des Rahmendeckels und des Rahmens kann vorzugsweise durch Rastelemente erfolgen, welche zwischen dem Rahmen und dem Rahmendeckel durch Aufpressen des Rahmendeckels verbindbar sind. Solche Rastelemente, beispielsweise im Außenbereich über den Rahmen übergreifende Rastzungen an dem Rahmendeckel, sind besonders einfach und effizient, um den Rahmendeckel von Hand aufpressen und beim Aufdrücken automatisch verbinden zu können. Bei einer entsprechenden Ausgestaltung lassen sich diese Rastelemente wieder anheben, beispielsweise händisch oder unter Zuhilfenahme eines Werkzeugs wie eines kleinen Schraubenziehers oder ähnlichem, sodass der Rahmendeckel auch wieder entfernt werden kann, wenn dies notwendig ist.

In der Praxis hat sich gezeigt, dass beim Verrasten von Rahmendeckel und Rahmen die Kraft entsprechend begrenzt ist, da der Rahmendeckel typischerweise nur händisch aufgerastet wird. Die Druckkräfte zum Erzielen der Abdichtung sind dabei sehr viel geringer als bei einem verschraubten Rahmendeckel. Insbesondere auch bei diesen relativ geringen Druckkräften durch ein manuelles Aufstecken des Rahmendeckels ist es nun so, dass bei der erfindungsgemäßen Ausgestaltung der Zugentlastungstüllen dennoch für verschiedene Kabeldurchmesser, welche in ein und derselben Tülle beispielsweise um 2 bis 3 mm voneinander abweichen, eine ausreichende Abdichtung erzielt werden kann, um die entsprechenden Schutzklassen wie beispielsweise IP65 zu erreichen. Idealerweise ist es dabei so, dass im montierten Zustand die Schlitze der Zugentlastungstüllen parallel zur größten Ausdehnung des Rahmendeckels verlaufen. Der Rahmendeckel wird also senkrecht zur Ausrichtung der Schlitze aufgesteckt, um so beim Aufstecken die beiden gegeneinander gerichteten Flächen der Schlitze zuverlässig zu verpressen.

Eine vorteilhafte Weiterbildung der Idee sieht es ferner vor, dass der Rahmendeckel und der Rahmen über korrespondierende formschlüssige Elemente verfügen, über welche beim Verbinden von Rahmendeckel und Rahmen die gewünschte Breite des Rahmens beziehungsweise der wenigstens einen Kammer sichergestellt ist. Über solche formschlüssig ineinandergreifende Elemente, beispielsweise konische Stifte und entsprechende Aufnahmeöffnungen zwischen dem Rahmendeckel und dem Rahmen, wird sichergestellt, dass eine konstante Breite nach der Montage erzielt wird. Dies gewährleistet eine relativ gleichmäßige Verteilung des Drucks über die gesamte längste Ausdehnung des Rahmendeckels, sodass nicht beispielsweise in der Mitte der Rahmen aufgewölbt bleibt und entsprechend weniger Druck auf die dort positionierten Zugentlastungstüllen einwirkt als im Randbereich, wie es der Fall wäre, wenn die Schenkel des U beispielsweise nach innen schräg verlaufen würden und der Rahmendeckel so nach oben "aufgebogen" wäre.

Vorteilhafte Weiterbildungen und Ausgestaltungen der Zugentlastungstüllen und/oder des mit ihnen versehenen Rahmens ergeben sich auch aus den Ausführungsbeispielen, welche nachfolgend unter Bezugnahme auf die Figuren näher beschrieben sind.

In den Figuren zeigen:
- Fig. 1 - 4: eine mögliche Ausführungsform einer erfindungsgemäßen Zugentlastungstülle mit einer Durchgangsöffnung in einer Ansicht von drei Seiten und in einer Schnittansicht;
- Fig. 5 u. 6: schematische Darstellung analog zu Fig. 4 mit eingelegten Kabeln unterschiedlicher Durchmesser;
- Fig. 7: eine alternative mögliche Ausführungsform einer erfindungsgemäßen Zugentlastungstülle in einer Schnittansicht analog zu der in Fig. 4
- Fig. 8 - 13: weitere verschiedene Ausgestaltungen der Durchgangsöffnung;
- Fig. 14: eine alternative Ausführungsform einer Zugentlastung;
- Fig. 15 - 20: eine weitere alternative Ausführungsform einer Zugentlastungstülle mit vier Durchgangsöffnungen;
- Fig. 21: eine weitere alternative Ausgestaltung mit zwei Durchgangsöffnungen;
- Fig. 22 u. 23: Zugentlastungstüllen in einer Kabeldurchführung zur Montage an einem Schaltschrank in einer ersten Ausführungsform;
- Fig. 24 - 26: Zugentlastungstüllen in einer alternativen Ausführungsform der Kabeldurchführung;
- Fig. 27: eine Zugentlastungstülle in einer weiteren alternativen Ausführungsform der Kabeldurchführung; und
- Fig. 28: eine Zugentlastungstülle in noch einer weiteren alternativen Ausführungsform der Kabeldurchführung.

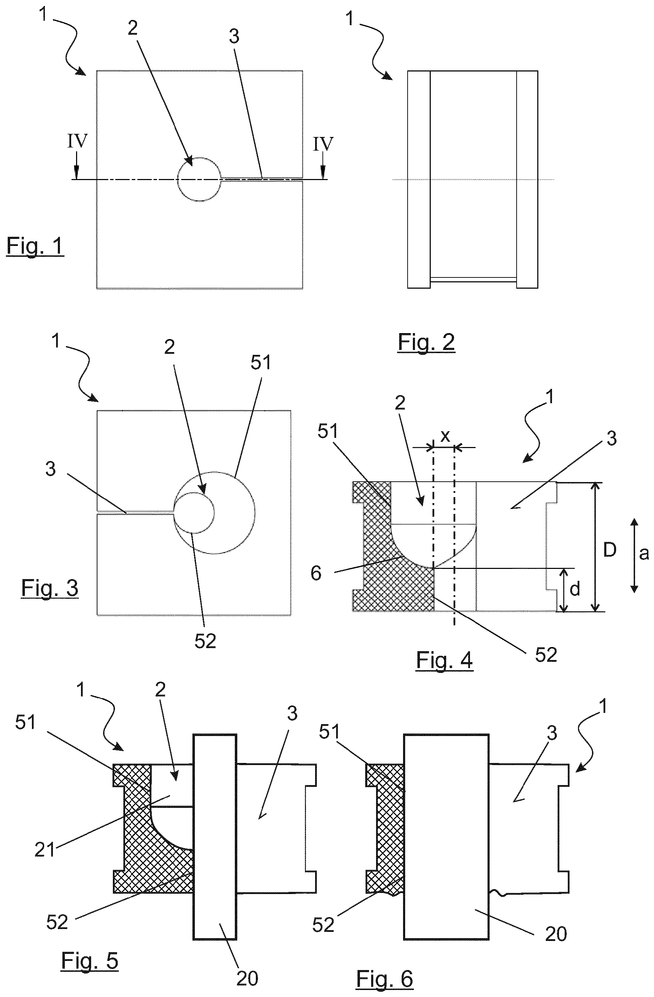

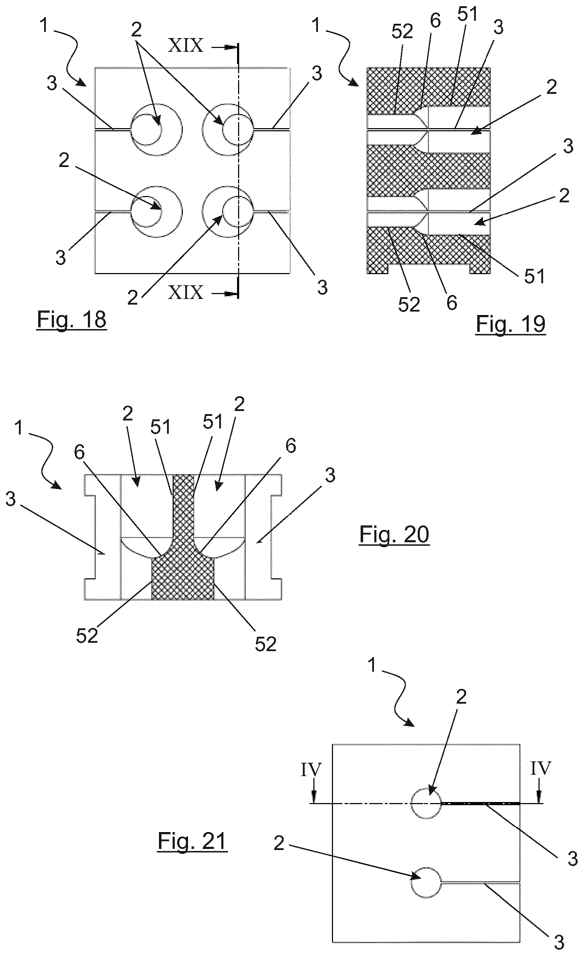

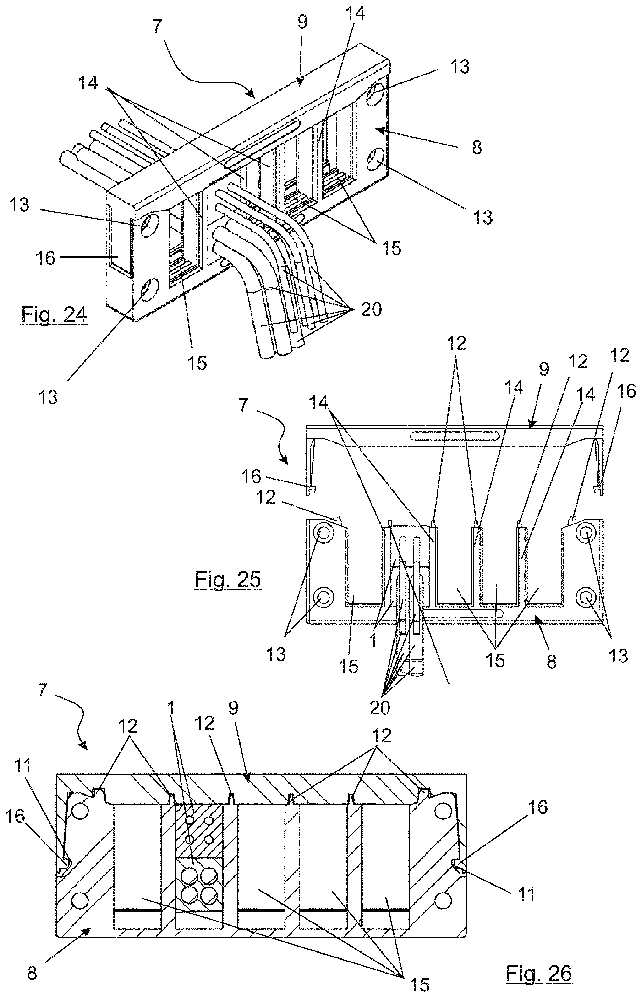

In der Darstellung der Figur 1 ist eine Zugentlastungstülle 1 in einer Frontansicht zu erkennen. In der Darstellung der Figur 2 ist eine Seitenansicht erkennbar, in der Darstellung der Figur 3 eine Rückansicht derselben Zugentlastungstülle 1. In Figur 4 ist ein Schnitt gemäß der Linie IV - IV in Figur 1 dargestellt. Die hier abgebildete Zugentlastungstülle 1 weist eine mit 2 bezeichnete Durchgangsöffnung zur Aufnahme eines Kabels auf. Die Durchgangsöffnung ist über einen mit 3 bezeichneten Schlitz mit einer der Außenseiten 4 der Zugentlastungstülle 1 verbunden. Die Zugentlastungstülle 1, welche aus einem elastomeren Material mit einer Shore-Härte in der Größenordnung von bis zu 100 Shore A, vorzugsweise 30 bis 90 Shore A, bestehen soll, lässt sich so entlang des Schlitzes 3 aufklappen, um in die Durchgangsöffnung 2 auch konfektionierte in Figur 1 bis 4 nicht dargestellte Kabel 20, also Kabel 20, welche bereits einen Stecker tragen oder ähnliches, einlegen zu können. Die Zugentlastungstülle 1 mit einem eingelegten Kabel 20 wird dann typischerweise in einem Rahmen 8 oder einem Aufnahmeelement verpresst, um einerseits die Zugentlastung des Kabels 20 in der Durchgangsöffnung 2 zu erreichen und andererseits eine zuverlässige Abdichtung zu erzielen. Dies ist prinzipiell aus dem Stand der Technik bekannt und wird bezüglich der Verwendung eines Rahmens 8 mit derartigen Zugentlastungstüllen später noch bei der Erläuterung der Figuren 19 ff. beschrieben. Die hier vorwiegend rechteckig bzw. quadratisch dargestellt Zugentlastungstülle 1 kann auch eine beliebige andere Außenkontur aufweisen, ebenso muss die Durchgangsöffnung 2 nicht kreisförmig ausgebildet sein, wie es rein beispielhaft in Figur 25 zu erkennen ist.

In der Darstellung der Figur 4 ist ein Schnitt entlang der Linie IV - IV in Figur 1 zu erkennen. Dieser Schnitt zeigt die Durchgangsöffnung 2, welche einen ersten mit 51 bezeichneten Zugentlastungsabschnitt eines ersten Querschnitts und einen zweiten mit 52 bezeichneten Zugentlastungsabschnitt eines zweiten Querschnitts zeigt, welcher kleiner als der Querschnitt des Zugentlastungsabschnitts 51 ist. Die Mittelachsen der hier beispielhaft runden Querschnitte der Durchgangsöffnung 2 beziehungsweise ihrer Zugentlastungsabschnitte 51, 52 verlaufen parallel und exzentrisch zueinander, sind also hier um den Weg x voneinander beabstandet. Die jeweiligen Außendurchmesser liegen dabei im Bereich des Schlitzes 3 aufeinander, wie es insbesondere in der Schnittdarstellung sowie in der Ansicht gemäß Figur 3 deutlich zu erkennen ist. Zwischen den beiden Zugentlastungsabschnitten 51, 52 erstreckt sich ein mit 6 bezeichneter Übergangsbereich. In dem hier dargestellten Ausführungsbeispiel ist dieser Übergangsbereich über eine Kurve ausgestaltet, welche kontinuierlich und stetig in den Zugentlastungsabschnitt 51 übergeht und mit dem Zugentlastungsabschnitt 52 über eine Kante verbunden ist. Durch die Ausgestaltung mit den auf der Linie des Schlitzes 3 sich berührenden Außenumfängen der Zugentlastungsabschnitte 51, 52 der Durchgangsöffnung 2, verändert sich dieser Übergangsbereich 6 in Richtung des Schlitzes 3 und nähert sich immer mehr der dortigen Form eines durchlaufenden geraden Übergangs zwischen den beiden Zugentlastungsabschnitten 51, 52 an.

Der Zugentlastungsabschnitt 52 mit dem geringsten Querschnitt der Durchgangsöffnung 2 weist dabei einen gewissen Anteil der axialen Länge der gesamten Durchgangsöffnung 2 auf. Diese axiale Länge der gesamten Durchgangsöffnung 2 entspricht der Dicke der Zugentlastungstülle 1 in Axialrichtung a, welche in der Darstellung der Figur 4 mit D eingezeichnet ist. Der Anteil der axialen Länge d des Zugentlastungsabschnitts 52 mit dem geringsten Querschnitt im Verhältnis zu dieser gesamten axialen Länge, also der Dicke D der Zugentlastungstülle 1, soll dabei mehr als 10 %, vorzugsweise mehr als 15 %, besonders bevorzugt mehr als 20 %, betragen. Das Verhältnis d/D ergibt sich damit zumindest 0,1. In der Darstellung der Figur 4 beträgt dieses Verhältnis in etwa 0,35, der Zugentlastungsabschnitt 52 mit dem kleinsten Querschnitt macht also ca. 35 % der axialen Gesamtlänge D der Durchgangsöffnung 2 aus. Dieser Wert muss in Abhängigkeit der Shore-Härte des Materials, welche vorzugsweise in der Größenordnung von 30 bis 90 Shore A liegt, entsprechend angepasst werden. Letzen Endes hängt dieser Wert auch von den beiden Querschnitten der Zugentlastungsabschnitte 51, 52 ab. Diese können wie in dem oben dargestellten Ausführungsbeispiel beispielsweise 5 mm einerseits und 7 mm andererseits betragen, um Kabel zwischen 5 und 8 mm Durchmesser sicher, dicht und zugentlastet in der Zugentlastungstülle 1 aufzunehmen.

Diese spezielle Ausgestaltung der Durchgangsöffnung 2 der Zugentlastungstülle 1 ermöglicht es nun, Kabel 20 mit einem Durchmesser, welcher dem Querschnitt des Zugentlastungsabschnitts 52 der Durchgangsöffnung 2 entspricht, ebenso sicher zuverlässig und dicht aufzunehmen, wie Kabel 20, welche dem Querschnitt des Zugentlastungsabschnitts 51 der Durchgangsöffnung 2 entsprechen. Bei dem dünneren Kabel 20 kommt der Zugentlastungsabschnitt 52 dichtend an dem Kabel 20 zur Anlage und sorgt für eine Abdichtung und gleichzeitig durch die vergleichsweise große Anlagefläche für eine zuverlässige Zugentlastung des Kabels 20. Im Zugentlastungsabschnitt 51 berührt die Zugentlastungstülle 1 das Kabel 20 nicht. In der Praxis ist es daher sinnvoll, die Zugentlastungstülle 1 mit dem Kabel 20 so einzubauen, dass die Seite der Zugentlastungstülle 1, an welche sich der Zugentlastungsabschnitt 52 anschließt, in Richtung des abzudichtenden Bereiches gerichtet wird, sodass Flüssigkeit gar nicht erst in den Bereich der Zugentlastungstülle 1 eindringen kann. Bei der Verwendung eines größeren Kabels 20 bis hin zum Durchmesser des Zugentlastungsabschnitts 51 der Durchgangsöffnung 2 ist es genau umgekehrt.

Dies ist in den beiden Figuren 5 und 6 schematisch dargestellt. Der Aufbau ist im Wesentlichen der aus Figur 4. In der Darstellung der Figur 5 ist ein Kabel beispielsweise mit einem Durchmesser von 5 mm eingelegt. Der Zugentlastungsabschnitt 52 dichtet dieses Kabel 20 gegenüber der Umgebung ab, sobald die Zugentlastungstülle 1 entsprechend verpresst ist, und stellt gleichzeitig eine gute Zugentlastung sicher. Zwischen dem Zugentlastungsabschnitt 51 und dem Kabel 20 verbleibt ein hier mit 21 bezeichneter Ringspalt. In der Darstellung der Figur 6 ist ein größeres Kabel beispielsweise mit einem Durchmesser von 7 mm in dieselbe Zugentlastungstülle 1 eingelegt. Der Zugentlastungsabschnitt 52 wird hier sehr stark verformt, wie es in der Darstellung der Figur 6 angedeutet ist. Dies betrifft gegebenenfalls auch den Schlitz 3 im axialen Bereich des Zugentlastungsabschnitts 52. Dies ist hier durch die entsprechend verformte Oberflächenkontur der Zugentlastungstülle 1 angedeutet. Eine solche Kontur stellt keine zuverlässige Abdichtung mehr sicher, gleichwohl kann sie im Normalfall die Zugentlastung gewährleisten. Die zuverlässige Abdichtung und auch Zugentlastung wird hier im Bereich des Zugentlastungsabschnitts 51 sichergestellt, welcher mit seinem Querschnitt zu dem Durchmesser des Kabels 20 passt, sodass hier eine dichte Anlage erzielt werden kann. Idealerweise wird der Aufbau dabei so eingebaut, dass die dichte Seite, beispielsweise beim Einbau in einen Schaltschrank, nach außen weist, um so das Eindringen von Flüssigkeit zwischen den Kabeln 20 und der Zugentlastungstülle 1 sicher und zuverlässig zu vermeiden.

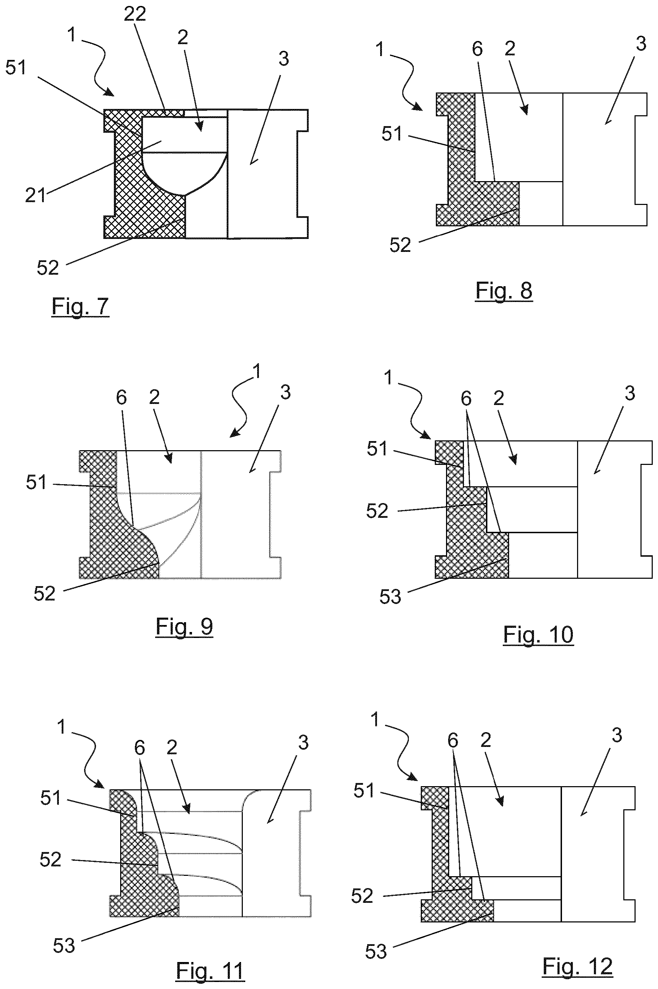

Die Variante in Figur 7 zeigt eine weitere mögliche Ausgestaltung. Wie in Figur 5 thematisiert ergibt sich beim Einlegen eines Kabels 20 mit geringem Durchmesser der Ringspalt 21 um das Kabel 20, im Bereich des Zugentlastungsabschnitts 51 mit dem größeren Querschnitt. Um diesen Ringspalt 21 abzudichten kann eine Dichtlippe 22, ebenfalls mit dem geringen offenen Querschnitt oder einem noch etwas kleineren offenen Querschnitt als der des Zugentlastungsabschnitts 52 mit dem geringsten Querschnitt vorgesehen sein. Diese Dichtlippe 22 überträgt dabei in der in Figur 7 dargestellten Ausführungsform keine Kräfte. Die Zugentlastung und die primäre Abdichtung erfolgt analog zur Darstellung in Figur 5 zwischen dem Zugentlastungsabschnitt 52 und dem Kabel 20. Die Dichtlippe 22 dient lediglich dazu den Ringspalt 21 abzudichten, um eine Ansammlung von gröberem Schmutz und Feuchtigkeit in seinem Bereich zu verhindern.

Alternativ dazu wäre es aber auch denkbar, anstelle der Dichtlippe 22 einen weiteren Zugentlastungsabschnitt 53 mit der dafür erforderlichen Breite von d > 0,1D vorzusehen.

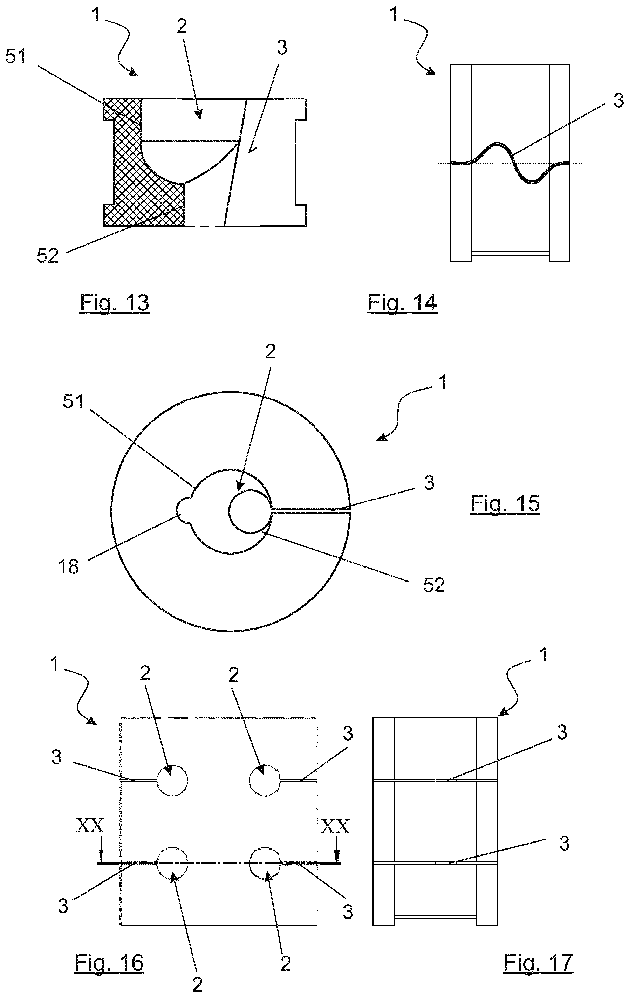

Die Figuren 8 bis 14 zeigen alternative Ausführungsformen der Innenkontur der Durchgangsöffnung 2. In der Darstellung der Figur 8 ist eine sehr einfache Variante mit einer Stufe zwischen dem Zugentlastungsabschnitt 51 und dem Zugentlastungsabschnitt 52 dargestellt. In der Darstellung der Figur 9 ist ein kontinuierlicher Übergang zwischen den Zugentlastungsabschnitten 51 und 52 dargestellt. In der Darstellung der Figur 10 ist erneut ein gestufter Aufbau dargestellt, bei dem drei verschiedene Zugentlastungsabschnitte 51, 52, 53 in absteigender Reihenfolge ihres Querschnitts angeordnet sind. Dies ermöglicht die zuverlässige Aufnahme von drei unterschiedlichen Kabeldurchmessern. In der Darstellung der Figur 11 ist ein ähnlicher Aufbau mit drei Zugentlastungsabschnitten 51, 52, 53 dargestellt, wobei die Übergänge hier wieder ähnlich aber prinzipiell umgekehrt wie in der Darstellung der Figur 4 ausgestaltet sind, nämlich mit einem kontinuierlichen Übergang zu dem einen Zugentlastungsabschnitt und einer Kante am Übergang zu dem anderen Zugentlastungsabschnitt. Ferner ist hier eine Art Einführungsphase zwischen dem ersten Zugentlastungsabschnitt 51 und dem Rand der Zugentlastungstülle 1 dargestellt. Dies erlaubt auch bei noch größeren Kabeldurchmessern eine zuverlässige Abdichtung. In der Darstellung der Figur 12 ist nochmals eine Darstellung in einem gestuften Aufbau zu erkennen. Anders als in der Darstellung der Figur 8 ist der Aufbau dabei so gewählt, dass die Stufen in axialer Richtung der Durchgangsöffnung 2 in zwei kleine Zugentlastungsabschnitte 52, 53 und einen entsprechend großen beziehungsweise langen Zugentlastungsabschnitt 51 aufgeteilt sind. Figur 13 zeigt eine weitere Variante mit einer auf der Seite des Schlitzes 3 schräg zu einem Mittelachse des Durchgangsöffnung 2 verlaufenden Seitenkante. Daneben sind auch andere vom linearen Verlauf abweichende Formen denkbar, welche insbesondere zu Vereinfachung der Fertigung durch Spritzgießen dienen, beispielsweise eine leichter sich durch Ausformschrägen ergebenden Knick oder ähnliches. Figur 14 zeigt in einer Seitenansicht einen in Axialrichtung a nicht linearen Verlauf des Schlitzes 3. Neben der hier dargestellten Verlauf mit einer Wellenform wären auch eine oder mehrere Stufen oder ähnliches denkbar.

Figur 15 zeigt abschließend noch eine Variante der Zugentlastungstülle 1 mit einem von einer rechteckigen oder quadratischen Außenkontur abweichenden, hier runden Kontur. Die Durchgangsöffnung 2 ist analog der Darstellung in Figur 3 von der Seite des Zugentlastungsabschnitts 51 mit dem größeren Querschnitt dargestellt. Dabei ist in Figur 15 eine Variante mit einer von der runden Form abweichenden Querschnittskontur des Zugentlastungsabschnitts 51 zu erkennen. Die Querschnittskontur des Zugentlastungsabschnitts 51 mit den größeren Querschnitt weist hier beispielhaft auf ihrer dem Schlitz 3 abgewandten Seite eine Ausbuchtung 18 auf. Auch andere Konturen, beispielsweise oval, polygon oder ähnliches sind denkbar. Der andere der Zugentlastungsabschnitte 52 ist hier beispielhaft mit runder Querschnittskontur dargestellt, auch hier wäre eine Abweichung davon jedoch denkbar. Insbesondere im Bereich des Zugentlastungsabschnitts 51 mit dem größeren Querschnitt ist die Abweichende Kontur jedoch hilfreich, da sie dem Material der Zugentlastungstülle 1 ein besseres "fließen" um das größere Kabel herum ermöglicht und damit größere Unterschiede in den Querschnitten ermöglicht.

Die Figur 16 zeigt eine alternative Ausführungsform einer Zugentlastungstülle 1 mit vier Durchgangsöffnungen 2 im Wesentlichen analog zur Darstellung der Figur 1 bis 4 mit einem zusätzlichen Schnitt XIX - XIX von Figur 16 in der Darstellung der Figur 19. Hier ist es so, dass jede der Durchgangsöffnungen 2 analog zu der in Figur 4 dargestellten Durchgangsöffnung ausgebildet ist. Prinzipiell wären hier natürlich auch alle Varianten der Innenkontur, wie sie in den Figuren 7 bis 13 und 15 beschrieben sind, denkbar. Alternativ zu der hier dargestellten Ausführungsform, bei der jede der Durchgangsöffnungen 2 ihren eigenen Schlitz 3 zu einer Außenseite 4 der Zugentlastungstülle 1 aufweist, wäre auch ein Aufbau denkbar, bei dem beispielsweise die beiden rechten Durchgangsöffnungen 2 in der Darstellung der Figur 13 über einen Schlitz mit den beiden linken Durchgangsöffnungen 2 in der Darstellung der Figur 16 verbunden wären und diese dann über den Schlitz 3 nach außen.

In der Darstellung der Figur 21 ist eine weitere Alternative der Zugentlastungstülle 1 zu erkennen. Der Schnitt gemäß der Linie IV - IV in der Darstellung der Figur 21 entspricht dabei in seiner Ansicht dem Schnitt gemäß Figur 4. Auch hier kann die Ausgestaltung analog den Ausführungen in den Figuren 7 bis 13 und 15 entsprechend erfolgen.

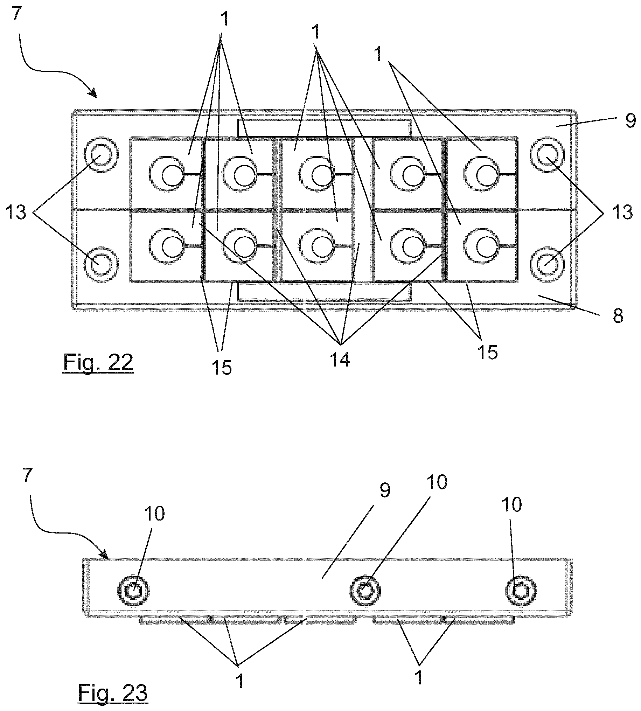

In der Figur 22 in einer Frontansicht und in der Figur 23 in einer Draufsicht ist eine Kabeldurchführung 7 zu erkennen. Sie besteht in dem Ausführungsbeispiel der Figur 22 aus einem unteren Rahmen 8 und einem weitgehend gleichgeformten Rahmendeckel 9, welche jeweils U-förmig ausgebildet sind. Durch Zwischenstege 14 werden dabei einzelne Kammern 15 in den Rahmen 8, sowie hier auch im Rahmendeckel 9, ausgebildet. In diesen Kammern 15 sind die Zugentlastungstüllen 1 mit den - hier nicht dargestellten Kabeln 20 - angeordnet.

Dabei können je nach Bedarf unterschiedliche Zugentlastungstüllen 1, z.B. in den oben beschriebenen Ausführungsvarianten in die Kammern 15 gesteckt werden, welche in ihrer Breite ein Rastermaß entsprechend einer der Zugentlastungstüllen 1 aufweisen und in der Höhe hier z.B. jeweils 2 der Zugentlastungstüllen 1 aufnehmen können. Im zusammenmontierten Zustand ist die Kabeldurchführung 7 zum Verschrauben mit der Wand eines nicht dargestellten Schaltschranks über Bohrungen 13 an den Seitenteilen des Rahmens 8 und/oder des Rahmendeckels 9 ausgebildet. In der Darstellung der Figur 22 sind dabei zehn einzelne Zugentlastungstüllen 1 mit jeweils einer Durchgangsöffnung 2 in einer Ansicht analog zu der in Figur 3 in die Kabeldurchführung 7 eingelegt. Der Rahmen 8 und der Rahmendeckel 9 der Kabeldurchführung 7 sind, wie es in der Darstellung der Figur 22 zu erkennen ist, über drei Schrauben 10 miteinander verschraubt, um den notwendigen Pressdruck zur Abdichtung und Zugentlastung auf die Zugentlastungstüllen 1 und die in den Durchgangsöffnungen 2 befindlichen Kabel 20, welche hier nicht dargestellt sind, aufzubringen.

In der Figur 24 ist eine alternative Ausführungsform einer solchen Kabeldurchführung 7 dargestellt. In der dreidimensionalen Ansicht sind dabei lediglich zwei der Zugentlastungstüllen 1 in einer Ausführungsvariante analog zur Darstellung in den Figuren 16 bis 20 entsprechend dargestellt. Sie sind in einer der Kammern 15 angeordnet, die restlichen Kammern 15 sind zur verbesserten Erkennbarkeit hier leer gelassen.

Die Kabeldurchführung 7 besteht auch hier aus einem Rahmen 8 sowie einem -in dieser Variante flachen - Rahmendeckel 9. Der Rahmen 8 ist im Wesentlichen U-förmig ausgebildet und hat fünf einzelne Kammern 15, welche wiederum über die Zwischenstege 14 voneinander getrennt sind, und welche in ihrer Breite ein Rastermaß entsprechend einer der Zugentlastungstüllen 1 aufweisen, vergleichbar zu dem Rahmen in der Darstellung der Figur 22. Da hier nur in eine der Kammern 15 zwei der Zugentlastungstüllen 1 mit ihren Kabeln 20 übereinander eingelegt sind, sind die Kammern 15 hier im Vergleich zur Darstellung in Figur 22 sehr gut zu erkennen. In der Frontansicht der Figur 25 ist derselbe Aufbau im geöffneten Zustand dargestellt. Der Rahmendeckel 9 weist zwei Rasthaken 16 auf, welche den eigentlichen Rahmen 8 seitlich umgreifen, wie es auch in der dreidimensionalen Ansicht der Figur 24 zu erkennen ist. Der Rahmendeckel 9 braucht nach dem Einlegen der Zugentlastungstüllen 1, wobei hier in der Praxis sämtliche Kammern 15 des Rahmens 8 mit den Zugentlastungstüllen 1 oder entsprechenden Blindtüllen zur Abdichtung gefüllt sind, nur von Hand aufgepresst werden, sodass der Rahmendeckel 9 einrastet. Dies ist in der Schnittdarstellung der geschlossenen Kabeldurchführung 7 in der Figur 26 zu erkennen. Die Rasthaken 16 des Rahmendeckels 9 sitzen dabei in entsprechenden Ausnehmungen 11 und sind mit diesen verrastet. Um eine Stabilisierung der Breite des Rahmens 8 nach dem Aufsetzen des Rahmendeckels 9 zu erzielen, sind außerdem mehrere formschlüssig ineinandergreifende Elemente 12 vorgesehen. Hierdurch ist sichergestellt, dass die Breite des Rahmens 8 nach der Montage des Rahmendeckels 9 in jedem Fall der gewünschten Breite entspricht, und dass die einzelnen Kammern 15 innerhalb des Rahmens 8 und zwischen den Zwischenstegen 14 hinsichtlich ihrer Breite zuverlässig in der vorgegebenen Breite gehalten werden. Dies ist insbesondere deshalb wichtig, da über den Rahmendeckel 9 die Zugentlastungstüllen 1 entsprechend verpresst werden. Unterschiedliche Breiten der einzelnen Kammern 15 aufgrund von Verformungen würden zu unterschiedlichen Pressungen auf die Zugentlastungstüllen 1 führen, und damit die Dichtheit beeinträchtigen. Um dies zu verhindern, können beispielsweise konische Stifte und entsprechend konische Bohrungen im Gegenstück als korrespondierende formschlüssige Elemente 12 vorgesehen werden. Hierdurch wird sichergestellt, dass die Breite der einzelnen durch die Zwischenstege 14 getrennten Kammern 15 einerseits und des Rahmens 8 als Ganzes andererseits konstant bleiben, sodass ein gleichmäßiger Druck durch den Rahmendeckel 9 auf die in den jeweiligen Kammern 15 befindlichen Zugentlastungstüllen 1 ausgeübt werden kann, um diese über den ganzen Aufbau hinweg gleichmäßig abdichten.

Ungeachtet dessen sind natürlich verschiedene Rastermaße der Kammern 15 in der Breite innerhalb eines Rahmens 8 mit den jeweils passenden Zugentlastungstüllen 1 denkbar.

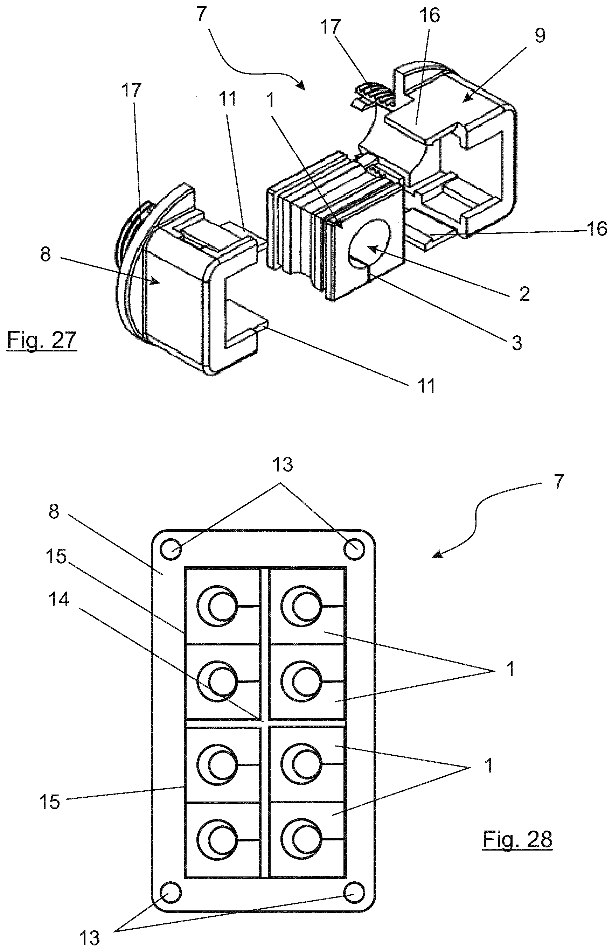

In der Darstellung der Figur 27 ist eine weitere Variante der Kabeldurchführung 7 mit dem Rahmen 8 und dem Rahmendeckel 9, hier zur Aufnahme nur einer der Kammern 15 und einer der Zugentlastungstüllen 1 dargestellt. Der Rahmen 8 und der Rahmendeckel 9 sind wieder sehr ähnlich ausgebildet und umfassen die Zugentlastungstülle 1 jeweils ein Wegstück entlang ihrer Außenseiten, hier rein beispielhaft jeweils zur Hälfte. Sie sind über zwei Rasthaken 16 miteinander verrastet, wobei auch eine verschraubte Ausführung denkbar wäre. Die montierte Kombination aus Rahmen 8 und Rahmendeckel 9 mit der Zugentlastungstülle 1 und dem eingelegten Kabel 20, welches hier nicht dargestellt ist, wird dann durch eine Öffnung, z.B. in einem Schaltschrank, hindurchgeführt und über eine hier nicht dargestellte Mutter und ein Gewinde 17 verschraubt.

Die Figur 28 zeigt abschließend eine Kabeldurchführung 7 bei welcher der Rahmen 8 einteilig und nicht einseitig offen ausgebildet ist. Die Kammern 15 werden auch hier von einem kreuzförmigen Zwischensteg 14 gebildet. Die hier nicht dargestellten Kabel 20 lassen sich so durch den Rahmen 8 hindurchführen. Anschließend wird der Zwischensteg 14 eingelegt und/oder die Zugentlastungstüllen 1 um die Kabel 20 gelegt. Dieser werden dann in Axialrichtung a, ggf. alle gemeinsam mit dem Zwischensteg 14, in den Rahmen 8 eingeschoben und durch Kraftschluss und/oder Formschluss in diesem gehalten.

Alle Varianten aus den unterschiedlichen Ausführungsbeispielen lassen sich dabei natürlich beliebig untereinander kombinieren. So ist die Kabeldurchführung 7 auch mit einer runden Kammer 15 denkbar oder eine Kabeldurchführung analog Figur 27 mit einem einteiligen Rahmen etc. Auch die Abweichung der Form der Durchgangsöffnung 2 bei rechteckiger oder quadratischer Zugentlastungstülle 1 kann mit allen Varianten gemäß den Figuren 4 bis 21 entsprechend kombiniert werden, auch lassen sich diese Varianten untereinander kombinieren und so weiter.

## Patentansprüche

1. Zugentlastungstülle (1) aus einem elastischen Werkstoff mit wenigstens einer axialen Durchgangsöffnung (2) zur Aufnahme wenigstens eines Kabels (20)
1.1 in der axialen Durchgangsöffnung (2), welche
1.2 über einen Schlitz (3) aufklappbar mit einer benachbarten Durchgangsöffnung (2) oder einer Außenseite (4) der Zugentlastungstülle (1) verbunden ist, wobei
1.3 jede der Durchgangsöffnungen (2) in Axialrichtung (a) hintereinander wenigstens zwei Zugentlastungsabschnitte (51, 52, 53) unterschiedlichen Querschnitts aufweist, wobei
1.4 die wenigstens zwei Zugentlastungsabschnitte (51, 52, 53) unterschiedlichen Querschnitts exzentrisch zueinander angeordnet sind, wobei
1.5 der Zugentlastungsabschnitt (52) mit dem geringsten Querschnitt der Durchgangsöffnung (2) wenigstens 10 %, vorzugsweise wenigstens 15 % der axialen Länge (D) der jeweiligen Durchgangsöffnung (2) ausmacht, wobei zwischen den wenigstens zwei Zugentlastungsabschnitten (51, 52, 53) unterschiedlichen Querschnitts jeweils ein Übergangsbereich (6) angeordnet ist, welcher die benachbarten Zugentlastungsabschnitte (51, 52, 53) verbindet, wobei
1.6 auf der Seite des Schlitzes (3) die Außenumfänge der wenigstens zwei Zugentlastungsabschnitte (51, 52, 53) unterschiedlichen Querschnitts direkt aneinander anschließen, sodass die Außenumfänge der Zugentlastungsabschnitte (51, 52, 53) auf der Linie des Schlitzes (3) sich berühren, **dadurch gekennzeichnet, dass** sich der Übergangsbereich (6) in Richtung des Schlitzes (3) verändert und immer mehr der dortigen Form eines durchlaufenden geraden Übergangs zwischen den Zugentlastungsabschnitten (51, 52, 53) annähert.

2. Zugentlastungstülle (1) nach Anspruch 1, **dadurch gekennzeichnet, dass** der Übergangsbereich (6) einen im Querschnitt durch die Durchgangsöffnung (2) gesehen auf der dem Schlitz (3) abgewandten Seite in Form einer Stufe oder einer Schräge ausgebildet ist.

3. Zugentlastungstülle (1) nach Anspruch 1, **dadurch gekennzeichnet, dass** der Übergangsbereich (6) im Schnitt quer durch die Durchgangsöffnung (2) gesehen auf der dem Schlitz (3) abgewandten Seite als kontinuierlicher Übergang ausgebildet ist.

4. Zugentlastungstülle (1) nach Anspruch 1, **dadurch gekennzeichnet, dass** der Übergangsbereich (6) im Schnitt quer durch die Durchgangsöffnung (2) gesehen auf der dem Schlitz (3) abgewandten Seite über eine Kurve ausgebildet ist, welche kontinuierlich in den einen Zugentlastungsabschnitt (51, 52, 53) und über eine Kante in den anderen Zugentlastungsabschnitt (53, 52, 51) übergeht.

5. Zugentlastungstülle (1) nach einem der Ansprüche 1 bis 4, **dadurch gekennzeichnet, dass** jede der Durchgangsöffnungen (2) wenigstens drei Zugentlastungsabschnitte (51, 52, 53) unterschiedlicher Querschnitte aufweist, welche insbesondere nach der Größe der Querschnitte sortiert in Axialrichtung (a) aufeinander folgen.

6. Zugentlastungstülle (1) nach einem der Ansprüche 1 bis 5, **dadurch gekennzeichnet, dass** der elastische Werkstoff eine Shore-Härte von weniger als 100 Shore A, vorzugsweise eine Shore-Härte von 30 bis 90 Shore A aufweist.

7. Zugentlastungstülle (1) nach einem der Ansprüche 1 bis 6, **dadurch gekennzeichnet, dass** zumindest eine der Durchgangsöffnungen (2) im Bereich wenigstens eines der Zugentlastungsabschnitte (51,53) mit einem der größeren Querschnitte eine Dichtlippe (22) aufweist.

8. Zugentlastungstülle (1) nach einem der Ansprüche 1 bis 7 mit genau einer Durchgangsöffnung (2), **dadurch gekennzeichnet, dass** die Mittelachse des Zugentlastungsabschnitts (52) mit dem geringsten Querschnitt zentral in der senkrecht zur Axialrichtung (a) stehenden Fläche der Zugentlastungstülle (1) angeordnet ist.

9. Kabeldurchführung (7) mit Zugentlastungstüllen (1) nach einem der Ansprüche 1 bis 8, mit einem Rahmen (8), welcher mit einer oder mehreren über Zwischenstege (14) getrennten Kammern (15) ausgebildet ist, wobei die Kammern (15) zur Aufnahme von jeweils wenigstens einer Zugentlastungstülle (1) ausgebildet sind.

10. Kabeldurchführung (7) nach Anspruch 9, **dadurch gekennzeichnet, dass** der Rahmen (8) einseitig offenen und mit im Wesentlichen U-förmig ausgebildet ist, und, mit einem Rahmendeckel (9) zum Verschließen des U-förmigen Rahmens, wobei im montierten Zustand die wenigstens eine Zugentlastungstülle (1) durch den Rahmendeckel (9) in der wenigstens einen Kammer (15) verspannt ist.

11. Kabeldurchführung (7) nach Anspruch 10, **dadurch gekennzeichnet, dass** die Schlitze (3) der Zugentlastungstüllen (1) im montierten Zustand parallel zur größten Ausdehnung des Rahmendeckels (9) verlaufen.

12. Kabeldurchführung (7) nach Anspruch 10 oder 11, **dadurch gekennzeichnet, dass** der Rahmendeckel (9) mit dem Rahmen (8) im montierten Zustand über Rastelemente (16,11) verrastet ist.

13. Kabeldurchführung (7) nach Anspruch 10, 11, oder 12, **dadurch gekennzeichnet, dass** der Rahmendeckel (9) und der Rahmen (8) über korrespondierende formschlüssige Elemente (12) verfügen, über welche beim Verbinden von Rahmendeckel (9) und Rahmen (8) die gewünschte Breite des Rahmens (8) und/oder der wenigstens einen Kammer (15) sichergestellt ist.

## Claims

1. A strain relief grommet (1) made of an elastic material with at least one axial through-opening (2) for receiving at least one cable (20)
1.1 in the axial through-opening (2), which
1.2 is foldably connected to an adjacent through-opening (2) or an outer side (4) of the strain relief grommet (1) via a slot (3), wherein
1.3 each of the through-openings (2) has at least two strain relief sections (51, 52, 53) of different cross-section one behind the other in the axial direction (a), wherein 1.4 the at least two strain relief sections (51, 52, 53) of different cross-section are arranged eccentrically to one another, wherein
1.5 the strain relief section (52) with the smallest cross-section of the through-opening (2) constitutes at least 10%, preferably at least 15%, of the axial length (D) of the respective through-opening (2), wherein a transition region (6), which connects the adjacent strain relief sections (51, 52, 53), is arranged between each of the at least two strain relief sections (51, 52, 53) of different cross-section, wherein,
1.6 on the side of the slot (3), the outer circumferences of the at least two strain relief sections (51, 52, 53) of different cross-section directly adjoin one another, so that the outer circumferences of the strain relief sections (51, 52, 53) in line with the slot (3) contact one another,
**characterised in that** the transition region (6) changes in the direction of the slot (3) and increasingly approaches the corresponding shape of a continuous straight transition between the strain relief sections (51, 52, 53).

2. The strain relief grommet (1) according to claim 1, **characterised in that** the transition region (6) is formed in the shape of a step or a slope on the side facing away from the slot (3), as seen in a cross section through the through-opening (2).

3. The strain relief grommet (1) according to claim 1, **characterised in that** the transition region (6) is formed as a continuous transition on the side facing away from the slot (3), as seen in a section transversely through the through-opening (2).

4. The strain relief grommet (1) according to claim 1, **characterised in that** the transition region (6) is formed via a curve on the side facing away from the slot (3), as seen in a section transversely through the through-opening (2), which curve transitions continuously into the one strain relief section (51, 52, 53) and over an edge into the other strain relief section (53, 52, 51).

5. The strain relief grommet (1) according to any one of claims 1 to 4, **characterised in that** each of the through-openings (2) has at least three strain relief sections (51, 52, 53) of different cross-sections, which follow one another in the axial direction (a), in particular sorted according to the size of the cross-sections.

6. The strain relief grommet (1) according to any one of claims 1 to 5, **characterised in that** the elastic material has a Shore hardness of less than 100 Shore A, preferably a Shore hardness of 30 to 90 Shore A.

7. The strain relief grommet (1) according to any one of claims 1 to 6, **characterised in that** at least one of the through-openings (2) has a sealing lip (22) in the region of at least one of the strain relief sections (51, 53) with one of the greater cross-sections.

8. The strain relief grommet (1) according to any one of claims 1 to 7, having exactly one through-opening (2), **characterised in that** the central axis of the strain relief section (52) with the smallest cross section is arranged centrally in the surface of the strain relief grommet (1) which is perpendicular to the axial direction (a).

9. A cable bushing (7), having strain relief grommets (1) according to any one of claims 1 to 8, having a frame (8) which is formed with one or more chambers (15) separated by intermediate webs (14), wherein the chambers (15) are adapted to each receive at least one strain relief grommet (1).

10. The cable bushing (7) according to claim 9, **characterised in that** the frame (8) is adapted to be open on one side and substantially U-shaped, and having a frame cover (9) for closing the U-shaped frame, wherein, in the assembled state, the at least one strain relief grommet (1) is braced in the at least one chamber (15) by the frame cover (9).

11. The cable bushing (7) according to claim 10, **characterised in that**, in the assembled state, the slots (3) of the strain relief grommets (1) extend in parallel to the greatest dimension of the frame cover (9).

12. The cable bushing (7) according to claim 10 or 11, **characterised in that**, in the assembled state, the frame cover (9) is latched to the frame (8) via latching elements (16, 11).

13. The cable bushing (7) according to claim 10, 11 or 12, **characterised in that** the frame cover (9) and the frame (8) have corresponding form-fitting elements (12), which ensure the desired width of the frame (8) and/or of the at least one chamber (15) when the frame cover (9) and the frame (8) are connected.

## Revendications

1. Douille de décharge de traction (1) faite d'un matériau élastique et possédant au moins une ouverture de passage axiale (2) pour recevoir au moins un câble (20)
1.1 dans l'ouverture de passage axiale (2), qui
1.2 communique via une fente (3) pouvant être ouverte avec une ouverture de passage (2) voisine ou une face extérieure (4) de la douille de décharge de traction (1),
1.3 chacune des ouvertures de passage (2) comportant au moins deux segments de décharge de traction (51, 52, 53) de section différente, les uns derrière les autres dans le sens axial (a),
1.4 les au moins deux segments de décharge de traction (51, 52, 53) de section différente étant disposés de façon excentrée les uns par rapport aux autres,
1.5 le segment de décharge de traction (52) ayant la plus petite section de l'ouverture de passage (2) représentant au moins 10 %, de préférence au moins 15 % de la longueur axiale (D) de l'ouverture de passage (2) en question, une zone de transition (6) qui relie les segments de décharge de traction (51, 52, 53) voisins étant respectivement disposée entre les au moins deux segments de décharge de traction (51, 52, 53) de section différente,
1.6 les circonférences extérieures des au moins deux segments de décharge de traction (51, 52, 53) de section différente se suivant directement du côté de la fente (3), de sorte que les circonférences extérieures des segments de décharge de traction (51, 52, 53) se touchent sur la ligne de la fente (3),
**caractérisée en ce que** la zone de transition (6) change dans la direction de la fente (3) et se rapproche de plus en plus de la forme à cet endroit d'une transition rectiligne continue entre les segments de décharge de traction (51, 52, 53).

2. Douille de décharge de traction (1) selon la revendication 1, **caractérisée en ce que** la zone de transition (6), vue en coupe transversale à travers l'ouverture de passage (2), est en forme de gradin ou de biseau sur le côté tourné à l'opposé de la fente (3).

3. Douille de décharge de traction (1) selon la revendication 1, **caractérisée en ce que** la zone de transition (6), vue en coupe transversale à travers l'ouverture de passage (2), est conformée comme une transition continue sur le côté tourné à l'opposé de la fente (3).

4. Douille de décharge de traction (1) selon la revendication 1, **caractérisée en ce que** la zone de transition (6), vue en coupe transversale à travers l'ouverture de passage (2), est conformée sur le côté tourné à l'opposé de la fente (3) comme une courbe avec une transition continue vers un segment de décharge de traction (51, 52, 53) et une transition sur une arête vers l'autre segment de décharge de traction (53, 52, 51).

5. Douille de décharge de traction (1) selon l'une des revendications 1 à 4, **caractérisée en ce que** chacune des ouvertures de passage (2) comporte au moins trois segments de décharge de traction (51, 52, 53) de sections différentes, qui se succèdent dans le sens axial (a), en particulier avec un classement par taille des sections.

6. Douille de décharge de traction (1) selon l'une des revendications 1 à 5, **caractérisée en ce que** le matériau élastique présente une dureté Shore inférieure à Shore 100 A, de préférence une dureté Shore de Shore 30 A à Shore 90 A.

7. Douille de décharge de traction (1) selon l'une des revendications 1 à 6, **caractérisée en ce qu'**au moins une des ouvertures de passage (2) présente une lèvre d'étanchéité (22), au niveau d'au moins un des segments de décharge de traction (51, 53) ayant une des plus grandes sections.

8. Douille de décharge de traction (1) selon l'une des revendications 1 à 7 possédant exactement une ouverture de passage (2), **caractérisée en ce que** l'axe médian du segment de décharge de traction (52) ayant la plus petite section est disposé au centre dans la surface de la douille de décharge de traction (1) perpendiculaire au sens axial (a).

9. Traversée de câbles (7) munie de douilles de décharge de traction (1) selon l'une des revendications 1 à 8, avec un cadre (8) doté d'une ou plusieurs chambres (15) séparées par des barrettes intercalaires (14), lesquelles chambres (15) sont conçues pour recevoir chacune au moins une douille de décharge de traction (1).

10. Traversée de câbles (7) selon la revendication 9, **caractérisée en ce que** le cadre (8) est ouvert d'un côté et conformé sensiblement en forme de U et muni d'un couvercle de cadre (9) pour fermer le cadre en forme de U, l'au moins une douille de décharge de traction (1) étant serrée par le couvercle de cadre (9) dans l'au moins une chambre (15) dans l'état monté.

11. Traversée de câbles (7) selon la revendication 10, **caractérisée en ce que** les fentes (3) de la douille de décharge de traction (1) s'étendent parallèlement à la plus grande dimension du couvercle de cadre (9) dans l'état monté.

12. Traversée de câbles (7) selon la revendication 10 ou 11, **caractérisée en ce que** le couvercle de cadre (9) est enclenché avec le cadre (8) dans l'état monté par des éléments d'enclenchement (16, 11).

13. Traversée de câbles (7) selon la revendication 10, 11 ou 12, **caractérisée en ce que** le couvercle de cadre (9) et le cadre (8) disposent d'éléments d'engagement positifs (12) qui se correspondent, par lesquels, lors de l'assemblage du couvercle de cadre (9) et du cadre (8), la largeur souhaitée du cadre (8) et/ou de l'au moins une chambre (15) est assurée.
